# EUROPÄISCHE PATENTANMELDUNG

(11) **EP 4 332 812 A1**
(43) Veröffentlichungstag der Anmeldung: **06.03.2024**
(21) Anmeldenummer: 22192683.5
(22) Anmeldetag: 29.08.2022
(51) Int. Cl.: G06F 21/62, H04L 9/40

(54) **VERFAHREN ZUM RECHNERGESTÜTZTEN VERWALTEN VON SICHERHEITSPROFILEN FÜR EINE ANZAHL VON APPLIKATIONEN IN EINEM DATENNETZ**

(71) Anmelder: Siemens Aktiengesellschaft, 80333 München (DE)
(72) Erfinder: Albrecht, Harald, 90475 Nürnberg (DE); Feist, Christian Peter, 80689 München (DE)
(74) Vertreter: Siemens Patent Attorneys

(57) **Zusammenfassung**

Die Erfindung betrifft ein Verfahren zum rechnergestützten Verwalten von Sicherheitsprofilen (SP) für eine Anzahl von Applikationen (AP1, AP2) in einem Datennetz (DN), wobei eine jeweilige Applikation (AP1, AP2) als ausführbares Programm in dem Datennetz (DN) installiert ist und für eine jeweilige Applikation (AP1, AP2) im Datennetz (DN) ein aktuell gültiges Sicherheitsprofil (SP) bereitgestellt werden kann, das Regeln für den Zugriff der jeweiligen Applikation (AP1, AP2) auf Ressourcen im Datennetz (DN) festlegt, wobei das Verfahren folgende Schritte für eine jeweilige Applikation (AP1, AP2) umfasst:
a) Bereitstellen eines Standard-Sicherheitsprofils (SSP1, SSP2) für die jeweilige Applikation als das aktuell gültige Sicherheitsprofil (SP) in dem Datennetz (DN);
b) Empfangen eines konfigurierten Sicherheitsprofils (CSP1, CSP2) für die jeweilige Applikation (AP1, AP2) im Datennetz (DN) über eine Schnittstelle (IF);
c) Anwenden des empfangenen konfigurierten Sicherheitsprofils (CSP1, CSP2) als neues aktuell gültiges Sicherheitsprofil (SP) auf die jeweilige Applikation (AP1, AP2).

## Beschreibung

Die Erfindung betrifft ein Verfahren zum rechnergestützten Verwalten von Sicherheitsprofilen für eine Anzahl von Applikationen in einem Datennetz sowie ein entsprechendes Datennetz.

Aus dem Stand der Technik sind unterschiedliche Ansätze bekannt, um ausführbare Programme, die als Applikationen in einem Datennetz hinterlegt sind, in ihrem Zugriff auf Ressourcen im Datennetz einzuschränken. Dabei ist für eine jeweilige Applikation ein Sicherheitsprofil vorgegeben, das Regeln für den Zugriff der jeweiligen Applikation auf Ressourcen im Datennetz festlegt.

Beispielsweise gibt es bei der Verwendung des Betriebssystems Linux Mechanismen der sog. MAC-Zugriffskontrolle (MAC = Mandatory Access Control), wie "SELinux", "AppArmor", aber auch weitere wie z.B. "seccomp", "Linux Capabilities", "Name Spaces" und dergleichen. Führt eine Applikation eine für sie nicht zulässige Operation aus, kann diese mit derartigen Mechanismen unterbunden und/oder gemeldet werden. Hierdurch wird ein Schutz gegen einen Angreifer erreicht, der Kontrolle über eine oder mehrere Applikationen besitzt.

Bei dem Sicherheitsmechanismus "SELinux" des Betriebssystems Linux gibt es zum Schutz vor schadhaften Applikationen die Möglichkeit, sog. Domänen in einem entsprechenden Sicherheitsprofil einer Applikation festzulegen. Dabei darf die Applikation nur in dieser Domäne ausgeführt werden und Prozesse der Applikation dürfen nur auf Dateien und Verzeichnisse zugreifen, für deren Label ein Zugriff durch die Domäne explizit erlaubt wurde.

Darüber hinaus gibt es bei SELinux die Möglichkeit, Applikationen eindeutige Kategorien zuzuweisen, wobei eine Applikation dann nicht auf Daten einer anderen Applikation zugreifen kann, wenn diese zu einer anderen Kategorie gehört. Auf diese Weise können Applikationen, die in der gleichen Domäne laufen, voneinander isoliert werden.

Ferner ist es bekannt, die oben beschriebenen SELinux-Domänen und analog auch sog. AppArmor-Profile im Betriebssystem Linux in einen aktiven (enforcing) und einen passiven (permissive) Zustand zur Laufzeit zu versetzen. Im aktiven Zustand ist der durch die Domäne bzw. das Profil gegebene Zugriffsschutz aktiv, wohingegen dieser im passiven Zustand deaktiviert ist, so dass Zugriffe der entsprechenden Applikation im passiven Zustand ermöglicht werden, die im aktiven Zustand nicht erlaubt wären. Solche Zugriffe werden jedoch protokolliert.

Die aus dem Stand der Technik bekannten Sicherheitsprofile für entsprechende Applikationen ermöglichen zwar einen zuverlässigen Schutz vor einem unbefugten Zugriff auf Ressourcen eines Datennetzes. Die entsprechenden Sicherheitsprofile der jeweiligen Applikationen können jedoch nach Installation der jeweiligen Applikation nicht mehr problemlos angepasst werden.

Aufgabe der Erfindung ist es, ein Verfahren zum rechnergestützten Verwalten von Sicherheitsprofilen für eine Anzahl von Applikationen in einem Datennetz sowie ein entsprechendes Datennetz zu schaffen, welche eine einfache Anpassung der verwalteten Sicherheitsprofile ermöglichen.

Diese Aufgabe wird durch das Verfahren gemäß Patentanspruch 1 bzw. das Datennetz gemäß Patentanspruch 13 gelöst. Weiterbildungen der Erfindung sind in den abhängigen Ansprüchen definiert.

Das erfindungsgemäße Verfahren dient zum rechnergestützten Verwalten von Sicherheitsprofilen für eine Anzahl von Applikationen (d.h. für eine oder mehrere Applikationen) in einem Datennetz. Eine jeweilige Applikation ist als ausführbares Programm in dem Datennetz installiert und für eine jeweilige Applikation kann im Datennetz ein aktuell gültiges Sicherheitsprofil bereitgestellt werden. Unter dem Begriff der jeweiligen Applikation ist dabei jede Applikation der Anzahl von Applikationen zu verstehen. Das aktuell gültige Sicherheitsprofil einer jeweiligen Applikation legt Regeln für den Zugriff der jeweiligen Applikation auf Ressourcen (d.h. Daten und/oder Speicherplatz und/oder Rechenleistung und dergleichen) im Datennetz fest. Mit dem entsprechenden Sicherheitsprofil werden somit geeignete Zugangsbeschränkungen der jeweiligen Applikation definiert, um hierdurch das Datennetz bzw. andere Applikationen vor Angreifern zu schützen, die unbefugt Kontrolle über die jeweilige Applikation haben.

Im erfindungsgemäßen Verfahren werden für eine jeweilige Applikation die nachfolgend erläuterten Schritte a) bis c) durchgeführt. In einem Schritt a) wird ein Standard-Sicherheitsprofil für die jeweilige Applikation als das aktuell gültige Sicherheitsprofil in dem Datennetz bereitgestellt. Auf diese Weise wird sichergestellt, dass die Applikation jederzeit mit einem geeigneten Schutz über das Standard-Sicherheitsprofil betrieben werden kann.

In einem Schritt b) wird ein konfiguriertes Sicherheitsprofil für die jeweilige Applikation im Datennetz über eine Schnittstelle empfangen, die vorzugsweise als Service- bzw. Dienste-Schnittstelle ausgestaltet ist. Anschließend wird in einem Schritt c) das empfangene konfigurierte Sicherheitsprofil als neues aktuell gültiges Sicherheitsprofil auf die jeweilige Applikation angewendet, d.h. das empfangene konfigurierte Sicherheitsprofil ersetzt das Standard-Sicherheitsprofil. Vorzugsweise kann das empfangene konfigurierte Sicherheitsprofil auch während der laufenden Applikation angewendet werden.

Das erfindungsgemäße Verfahren weist den Vorteil auf, dass die Sicherheitseinstellungen von bereits installierten Applikationen auf einfache Weise über eine Schnittstelle für neu konfigurierte Sicherheitsprofile geändert werden können.

In einer bevorzugten Ausführungsform wird als Betriebssystem für das Datennetz Linux verwendet, jedoch können gegebenenfalls auch andere Betriebssysteme zum Einsatz kommen, sofern über diese Betriebssysteme Sicherheitsprofile bereitgestellt werden können. Ein Sicherheitsprofil legt beispielsweise fest, in welchem Netzwerkbereich des Datennetzes die jeweilige Applikation ausgeführt werden darf und/oder auf welche Daten die jeweilige Applikation zugreifen darf. Unter den Begriff des Sicherheitsprofils fallen auch an sich bekannte Sicherheitsprofile, die entsprechende Zugriffsregeln für Applikationen festlegen.

In einer besonders bevorzugten Ausführungsform enthält ein aktuell gültiges Sicherheitsprofil für eine jeweilige Applikation eine Anzahl von Sicherheitsmechanismen (d.h. einen oder mehrere Sicherheitsmechanismen), wobei das aktuell gültige Sicherheitsprofil für jeden Sicherheitsmechanismus eine Konfigurationseinstellung festlegt, welche aus einer Mehrzahl von möglichen Konfigurationseinstellungen des jeweiligen Sicherheitsmechanismus ausgewählt ist. Hierdurch wird eine einfache Konfiguration eines Sicherheitsprofils nach Art eines Baukastens durch Auswahl entsprechender Konfigurationseinstellungen, beispielsweise über die weiter unten beschriebene Benutzerschnittstelle, gewährleistet. Unter den Begriff des Sicherheitsmechanismus fallen auch an sich bekannte Sicherheitsmechanismen. Wird als Betriebssystem für das Datennetz Linux verwendet, kann ein Sicherheitsmechanismus beispielsweise "SELinux", "AppArmor", "seccomp", "Linux Capabilities", "Name Spaces" und dergleichen sein. All diese Sicherheitsmechanismen sind dem Fachmann hinlänglich bekannt und werden deshalb nicht weiter im Detail erläutert.

In einer weiteren bevorzugten Ausführungsform sind im aktuell gültigen Sicherheitsprofil für zumindest eine Applikation und vorzugsweise jede Applikation der Anzahl von Applikationen eine oder mehrere Zugriffsbeschränkungen der zumindest einen Applikation jeweils in einen aktiven oder einen passiven Zustand gesetzt. Dabei sind Zugriffe, die in einem aktiven Zustand einer jeweiligen Zugriffsbeschränkung nicht zugelassen sind, im entsprechenden passiven Zustand der jeweiligen Zugriffsbeschränkung erlaubt und werden dabei bei deren Auftreten protokolliert. Entsprechende Zugriffsbeschränkungen im aktiven oder passiven Zustand können mit an sich bekannten Mechanismen, wie z.B. durch die oben beschriebenen Zustände "enforcing" und "permissive" für SELinux-Domänen bzw. AppArmor-Profile realisiert werden.

In einer bevorzugten Variante der soeben beschriebenen Ausführungsform wird im Falle, dass keine Zugriffe, die in einem aktiven Zustand einer jeweiligen Zugriffsbeschränkung nicht zugelassen sind, im entsprechenden passiven Zustand der jeweiligen Zugriffsbeschränkung protokolliert werden, die jeweilige Zugriffsbeschränkung in den aktiven Zustand im aktuell gültigen Sicherheitsprofil gesetzt. Alternativ oder zusätzlich kann ein entsprechender Hinweis über eine Benutzerschnittstelle ausgegeben werden, wobei die Benutzerschnittstelle der weiter unten beschriebenen Benutzerschnittstelle entsprechen kann.

Mit der soeben beschriebenen Variante der Erfindung kann überprüft werden, ob eine Applikation mit der Aktivierung einer entsprechenden Zugriffsbeschränkung ordnungsgemäß ohne Blockierung läuft. In diesem Fall besteht die Möglichkeit, die Zugriffsbeschränkung im aktuell gültigen Sicherheitsprofil zu übernehmen.

In einer weiteren bevorzugten Ausführungsform ist das Standard-Sicherheitsprofil in Abhängigkeit von Eigenschaften der jeweiligen Applikation festgelegt, z.B. in Abhängigkeit von dem Typ der Applikation und/oder dem Hersteller der Applikation und/oder anhand weiterer Kennzeichnungen, die vorzugsweise in den Metadaten der Applikation enthalten sind.

In einer weiteren bevorzugten Variante der Erfindung ist das in Schritt c) angewendete konfigurierte Sicherheitsprofil nur temporär gültig, wobei nach Ablauf seiner Gültigkeit das Standard-Sicherheitsprofil für die jeweilige Applikation gültig wird. Die temporäre Gültigkeit kann dabei an verschiedene Kriterien gekoppelt sein. In einer einfachen Variante kann eine Zeitspanne für die Gültigkeit des konfigurierten Sicherheitsprofils vorgegeben sein. Ebenso ist es möglich, dass die Gültigkeit des Sicherheitsprofils beim nächsten Beenden der jeweiligen Applikation beendet wird und dann das Standard-Sicherheitsprofil wieder gültig wird. Mit dieser Variante wird sichergestellt, dass konfigurierte Sicherheitsprofile mit eingeschränkten Schutzmechanismen nicht dauerhaft im Datennetz verwendet werden.

In einer weiteren bevorzugten Variante des erfindungsgemäßen Verfahrens wird eine Benutzerschnittstelle bereitgestellt, über welche ein Benutzer das Sicherheitsprofil einer jeweiligen Applikation konfigurieren kann, wobei ein vom Benutzer konfiguriertes Sicherheitsprofil als das konfigurierte Sicherheitsprofil für die jeweilige Applikation im Datennetz über die Schnittstelle in Schritt b) empfangen wird. Hierdurch wird einem Benutzer auf einfache Weise eine Konfigurationsmöglichkeit für entsprechende Sicherheitsprofile gegeben. Die Benutzerschnittstelle kann dabei beliebig ausgestaltet sein. Vorzugsweise handelt es sich um eine visuelle Benutzerschnittstelle, die auf einem Display angezeigt wird und durch einen Benutzer geeignet bedient werden kann.

In einer weiteren bevorzugten Ausführungsform wird das in Schritt c) angewendete konfigurierte Sicherheitsprofil an eine Verarbeitungseinheit im Datennetz übertragen, welche das angewendete konfigurierte Sicherheitsprofil auswertet. Der Begriff der Auswertung ist dabei weit zu verstehen und jegliche Analyse des Sicherheitsprofils mit einem entsprechenden Ergebnis, das gespeichert bzw. gegebenenfalls über eine Benutzerschnittstelle angezeigt werden kann, fällt unter diesen Begriff.

In einer bevorzugten Variante der soeben beschriebenen Ausführungsform nimmt die Verarbeitungseinheit in Abhängigkeit vom Ergebnis der Auswertung eine oder mehrere Veränderungen an dem angewendeten konfigurierten Sicherheitsprofil vor. Beispielsweise kann in der Verarbeitungseinheit hinterlegt sein, dass für einen oder mehrere vorgegebene Sicherheitsmechanismen im Sicherheitsprofil priorisierte Einstellungen vorgenommen werden. Sollten die Einstellungen im angewendeten konfigurierten Sicherheitsprofil hiervon abweichen, werden diese durch die Verarbeitungseinheit geeignet mit den priorisierten Einstellungen überschrieben.

Das erfindungsgemäße Verfahren kann in einem beliebigen Datennetz zum Einsatz kommen. In einer bevorzugten Ausführungsform wird das Verfahren in einem an sich bekannten Edge-Computing-Netzwerk genutzt. Dieses Netzwerk enthält eine Vielzahl von Edge-Knoten bzw. Edge-Geräten, die dezentral entsprechende Aufgaben im Datennetz übernehmen. Bei der Verwendung eines Edge-Computing-Netzwerks ist die Anzahl von Applikationen auf zumindest einem Edge-Gerät der Vielzahl von Edge-Geräten installiert.

In einer weiteren bevorzugten Ausführungsform ist das Datennetz zur Steuerung einer Automatisierungsanlage, wie z.B. einer Anlage zur Fertigungs- oder Produktionsautomatisierung, vorgesehen. Das Datennetz kommt somit im industriellen Umfeld zum Einsatz.

In einer weiteren bevorzugten Ausführungsform werden für die jeweiligen Applikationen an sich bekannte Containerisierungstechnologien verwendet, d.h. eine jeweilige Applikation ist in einem oder mehreren Software-Containern hinterlegt. Hierdurch wird eine geeignete Kapselung der Applikationen erreicht. Wird als Betriebssystem im Datennetz Linux verwendet, kann als Containerisierungstechnologie z.B. Docker zum Einsatz kommen.

Neben dem oben beschriebenen Verfahren betrifft die Erfindung ein Datennetz, in dem eine Anzahl von Applikationen hinterlegt ist, wobei eine jeweilige Applikation als ausführbares Programm in dem Datennetz installiert ist und für eine jeweilige Applikation im Datennetz ein aktuell gültiges Sicherheitsprofil bereitgestellt werden kann, das Regeln für den Zugriff der jeweiligen Applikation auf Ressourcen im Datennetz festlegt. Dieses Datennetz ist dazu eingerichtet, die oben beschriebenen Schritte a) bis c) des erfindungsgemäßen Verfahrens für eine jeweilige Applikation der Anzahl von Applikationen durchzuführen. Mit anderen Worten ist das Datennetz zur Durchführung eines Verfahrens gemäß Patentanspruch 1 eingerichtet.

In einer bevorzugten Variante des oben beschriebenen Datennetzes ist das Datennetz zur Durchführung eines Verfahrens nach einer oder mehreren bevorzugten Varianten des erfindungsgemäßen Verfahrens eingerichtet.

Ausführungsbeispiele der Erfindung werden nachfolgend anhand der beigefügten Figuren detailliert beschrieben.

Es zeigen:
- Fig. 1: eine schematische Darstellung eines Ausschnitts eines Datennetzes, in dem eine Ausführungsform des erfindungsgemäßen Verfahrens durchgeführt wird; und
- Fig. 2: eine schematische Darstellung, welche beispielhaft den Aufbau einer aus Fig. 1 ersichtlichen Benutzerschnittstelle wiedergibt.

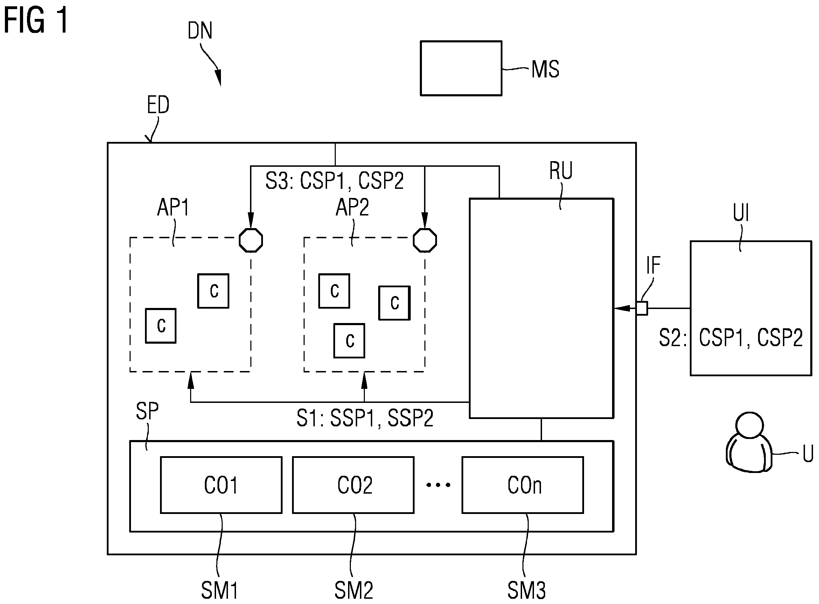

Nachfolgend wird eine Ausführungsform der Erfindung anhand des in Fig. 1 ausschnittsweise gezeigten Datennetzes DN erläutert. Bei dem Datennetz handelt es sich um ein sog. Edge-Computing-Netzwerk, bei dem - im Unterschied zu einem Cloud-Computing-Netzwerk - lokal Operationen am Rand des Netzwerks in sog. Edge-Knoten bzw. Edge-Geräten durchgeführt werden. Nichtsdestotrotz ist die Erfindung auch in einem anderen Datennetz verwendbar, insbesondere auch in einem Cloudbasierten Datennetz, bei dem sich die Applikationen in der Cloud befinden und nicht mehr lokal einzelnen Edge-Geräten zugeordnet werden können.

Beispielhaft ist ein einzelnes Edge-Gerät in Fig. 1 dargestellt und mit Bezugszeichen ED bezeichnet. Für dieses Edge-Gerät wird die Konfiguration von darauf laufenden Applikationen gemäß einer Variante der Erfindung erläutert.

Das Datennetz DN ist in der hier beschriebenen Ausführungsform für eine Automatisierungsanlage vorgesehen, kann jedoch auch einem beliebigen anderen Zweck dienen. Das Datennetz hat neben dem Edge-Gerät ED eine Vielzahl von weiteren Edge-Geräten und anderen Komponenten, von denen lediglich noch eine Verarbeitungseinheit MS (MS = Management System) wiedergegeben ist, welche konfigurierte Sicherheitsprofile auswertet, wie weiter unten noch näher erläutert wird.

In der hier beschriebenen Ausführungsform wird als Betriebssystem des Datennetzes DN Linux verwendet, so dass im Folgenden auch auf Sicherheitsmechanismen aus Linux Bezug genommen wird. Die Erfindung ist jedoch auch auf beliebige andere Betriebssysteme mit entsprechenden Sicherheitsmechanismen anwendbar und die Beschreibung anhand von Linux ist lediglich beispielhaft.

Auf dem Edge-Gerät ED befinden sich die beiden Applikationen AP1 und AP2, die im Folgenden auch als Apps bezeichnet werden. Die dargestellte Anzahl von zwei Applikationen ist lediglich beispielhaft. Bei den Applikationen AP1, AP2 handelt es sich um Programme, die auf dem Edge-Gerät ED installiert sind und dort ausgeführt werden können. Die Applikationen können zu unterschiedlichen Applikationstypen gehören. Eine Applikation kann z.B. eine Standard-App, eine System-App oder eine Diagnose-App sein. Im hier beschriebenen Ausführungsbeispiel sind die Applikationen Container-basierte Applikationen, d.h. jede der Applikationen AP1 und AP2 enthält eine Mehrzahl von Containern, die in Fig. 1 mit Bezugszeichen C bezeichnet sind. Die Kapselung von Applikationen in Containern ist dabei an sich bekannt. Beispielsweise kann die Software "Docker" als Containerisierungstechnologie für die Applikationen genutzt werden.

Die einzelnen Applikationen können mittels einer an sich bekannten App-Laufzeitzeitumgebung (englisch App Runtime) RU gesteuert werden, wobei im dargestellten Ausführungsbeispiel die Laufzeitumgebung RU sowohl für die Applikation AP1 als auch für die Applikation AP2 zuständig ist. Für jede der Applikationen existiert ein Sicherheitsprofil, wobei der Aufbau eines entsprechenden Sicherheitsprofils SP in Fig. 1 verdeutlicht ist. Alle nachfolgend erläuterten Sicherheitsprofile haben den Aufbau entsprechend dem Sicherheitsprofil SP. Das Sicherheitsprofil SP umfasst eine Vielzahl von Sicherheitsmechanismen SM1, SM2, ..., SMn, wie weiter unten noch näher erläutert wird.

Die Grundidee des hier beschriebenen Verfahrens besteht darin, eine Konfigurationsmöglichkeit der entsprechenden Sicherheitsprofile der Apps AP1, AP2 nach deren Installation bzw. zu deren Laufzeit bereitzustellen. Auf diese Weise können insbesondere während einer Entwicklungs-, Debug-, Provisionierungs- oder Produktiv-Phase eines Edge-Geräts die Sicherheitseinschränkungen von Apps sukzessive und unabhängig von denen anderer Apps angepasst werden.

Die nachfolgend beschriebenen Sicherheitsprofile legen Zugriffsrechte einzelner Apps auf Ressourcen in dem Datennetz DN basierend auf MAC-Mechanismen (MAC = Mandatory Access Control) sowie weiteren Mechanismen fest. In an sich bekannter Weise können z.B. SELinux-Domänen, AppArmor-Profile, seccomp-Profile, eine Liste von zugewiesenen Linux-Capabilities und dergleichen festgelegt werden. Die Erfindung ist jedoch auch auf beliebige andere Spezifikationen von Sicherheitsprofilen anwendbar, sofern über die Sicherheitsprofile Regeln für den Zugriff einzelner Apps auf Ressourcen im Datennetz festgelegt werden.

Gemäß der Ausführungsform der Fig. 1 werden in einem Schritt S1 Standard-Sicherheitsprofile für die jeweiligen Apps durch die Laufzeitumgebung RU bereitgestellt. Das Standard-Sicherheitsprofil für die App AP1 ist dabei mit SSP1 und das Standard-Sicherheitsprofil für die App AP2 mit SSP2 bezeichnet. Diese Standard-Sicherheitsprofile können bei bzw. nach Installation der jeweiligen App in dem Edge-Gerät ED mit Hilfe der Laufzeitumgebung RU hinterlegt werden. Die Standard-Sicherheitsprofile können je nach Ausgestaltung basierend auf unterschiedlichen Kriterien festgelegt werden. Vorzugsweise sollte die sicherste Einstellung zum bestmöglichen Schutz des Datennetzes festgelegt werden. Beispielsweise können die Einstellungen der Standard-Sicherheitsprofile anhand des Typs der App, des Herstellers der App oder anhand eines weiteren Labels ermittelt werden. All diese Informationen sind Teil der App-Metadaten, die z.B. bei der Verwendung von Docker als Containerisierungstechnologie im docker-compose.yml der jeweiligen App hinterlegt sind.

Erfindungsgemäß wird nunmehr die Möglichkeit geschaffen, dass das Standard-Sicherheitsprofil, das ursprünglich für die einzelnen Apps hinterlegt ist, auch im Nachhinein noch geeignet verändert werden kann. Hierzu wird eine Service- bzw. Dienste-Schnittstelle IF genutzt, über welche in dem in Fig. 1 dargestellten Schritt S2 neu konfigurierte Sicherheitsprofile CSP1, CSP2 eingelesen werden können. Das Sicherheitsprofil CSP1 ist dabei ein neu konfiguriertes Sicherheitsprofil, das das Standard-Sicherheitsprofil SSP1 der App AP1 ersetzt, wohingegen das neu konfigurierte Sicherheitsprofil CSP2 ein Sicherheitsprofil ist, das das Standard-Sicherheitsprofil SSP2 der App AP2 ersetzt.

In der Ausführungsform der Fig. 1 werden die in Schritt S2 empfangenen Sicherheitsprofile CSP1, CSP2 durch einen Benutzer U über eine geeignete Benutzerschnittstelle UI, z.B. über eine web-basierte Benutzerschnittstelle, konfiguriert. Nichtsdestotrotz ist es auch möglich, dass die neu konfigurierten Sicherheitsprofile automatisiert basierend auf entsprechenden Kriterien, die gegebenenfalls wiederum von einem Benutzer festgelegt sein können, erzeugt werden und anschließend in Schritt S2 über die Dienste-Schnittstelle IF eingelesen werden.

Die über die Dienste-Schnittstelle IF empfangenen Sicherheitsprofile werden anschließend mittels der Laufzeitumgebung RU in Schritt S3 auf die entsprechenden Applikationen AP1 und AP2 angewendet, d.h. sie ersetzen die aktuell gültigen Sicherheitsprofile SSP1 und SSP2, wie bereits oben erläutert wurde. Das Anwenden der neu konfigurierten Sicherheitsprofile kann beispielsweise durch das Modifizieren der docker-compose.yml der entsprechenden Container-basierten App erfolgen. Die Einstellungen der neuen Sicherheitsprofile werden dann beim erneuten Start der App bzw. dessen Container durch die Containerlaufzeitumgebung final umgesetzt.

Fig. 1 zeigt beispielhaft den Aufbau eines entsprechenden Sicherheitsprofils SP für die jeweiligen Apps, wobei dieser Aufbau sowohl für die Standard-Sicherheitsprofile als auch die über die Benutzerschnittstelle UI konfigurierten Sicherheitsprofile gültig ist. Das Sicherheitsprofil SP ist nach Art eines Baukastens konfiguriert, in dem für eine Vielzahl von Sicherheitsmechanismen des jeweiligen Profils, welche in Fig. 1 mit SM1, SM2, ..., SMn bezeichnet sind, jeweils eine geeignete Konfigurationseinstellung des entsprechenden Sicherheitsmechanismus aus einer Vielzahl von Konfigurationseinstellungen ausgewählt ist. In Fig. 1 ist die ausgewählte Konfigurationseinstellung für den Sicherheitsmechanismus SM1 mit CO1, für den Sicherheitsmechanismus SM2 mit CO2 und für den Sicherheitsmechanismus SMn mit COn bezeichnet.

Die einzelnen Sicherheitsmechanismen SM1 bis SMn können in einem Linux-Betriebssystem die an sich bekannten Sicherheitsmechanismen "SELinux", "AppArmor", "seccomp", "Linux Capabilities" und dergleichen darstellen. Beispielsweise können für den Sicherheitsmechanismus "SELinux" eine oder mehrere Domänen festgelegt werden, in denen die entsprechende App ausgeführt werden darf bzw. auf deren Daten die entsprechende App zugreifen kann. Entsprechend festgelegte Domänen sind dann in einer Konfigurationseinstellung des Sicherheitsmechanismus der entsprechenden App hinterlegt.

In einer bevorzugten Variante kann beispielsweise für den Sicherheitsmechanismus SELinux auch festgelegt werden, ob die entsprechende Domäne in einem aktiven Zustand ("enforcing mode") oder in einem passiven Zustand ("permissive mode") ist. Im aktiven Zustand der Domäne kann die entsprechende App ausschließlich auf die Domäne zugreifen, wohingegen im passiven Zustand die App auch auf andere Domänen zugreifen kann, was im aktiven Zustand einem Regelbruch entsprechen würde. Befindet sich die Domäne einer App im passiven Zustand, sind die entsprechenden Regelbrüche erlaubt, sie werden jedoch in der Form von Nachrichten protokolliert.

In der hier beschriebenen Ausführungsform ist in dem Datennetz DN die bereits oben erwähnte Verarbeitungseinheit MS vorgesehen, an welche die neu konfigurierte Sicherheitsprofile CSP1, CSP2 übertragen werden. Die Verarbeitungseinheit wertet die übertragenen Sicherheitsprofile aus und kann z.B. automatisiert Berichte erstellen. In einer bevorzugten Ausführungsform kann die Verarbeitungseinheit die konfigurierten Sicherheitsprofile auch nochmal selbst verändern. Zum Beispiel können in der Verarbeitungseinheit priorisierte Konfigurationsinformationen für die Sicherheitsprofile in Abhängigkeit der einzelnen Apps bzw. App-Typen hinterlegt sein. Entsprechende priorisierte Konfigurationsinformationen überschreiben, sofern erforderlich, die aktuellen Konfigurationseinstellungen in den neu konfigurierten Sicherheitsprofilen. Die Sicherheitsprofile mit den überschriebenen Konfigurationseinstellungen werden dann von der Verarbeitungseinheit MS wieder an das Edge-Gerät ED übermittelt und die überschriebenen Konfigurationseinstellungen werden beim nächsten Start der entsprechenden App berücksichtigt.

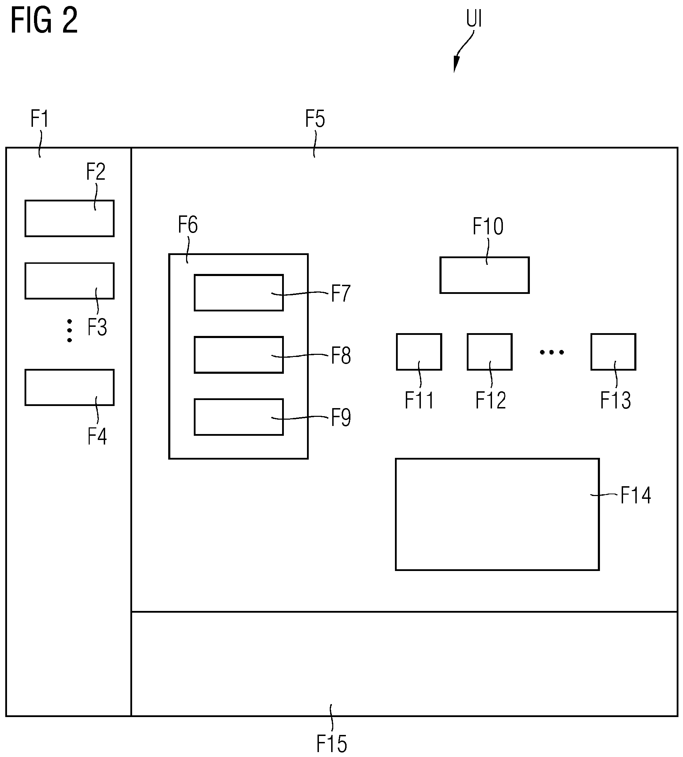

Fig. 2 zeigt beispielhaft einen möglichen Aufbau der Benutzerschnittstelle UI aus Fig. 1. Es handelt sich hierbei um eine visuelle Benutzerschnittstelle, die auf einem Display wiedergegeben wird. Die Benutzerschnittstelle umfasst eine Vielzahl von Anzeigefeldern, die mit Bezugszeichen F1 bis F15 bezeichnet sind, wobei diese Bezugszeichen in der tatsächlichen Visualisierung der Benutzerschnittstelle nicht enthalten sind. Die einzelnen Anzeigefelder F1 bis F15 sind zum Teil durch eine Benutzerinteraktion anwählbar, z.B. durch entsprechende Berührung des Anzeigefelds über den Finger des Benutzers U bei einem berührungssensitiven Display. Die einzelnen Anzeigefelder enthalten eine für den Benutzer U bestimmte Information, z.B. in der Form von Text. Die entsprechende Information in den Anzeigefeldern ist aus Übersichtlichkeitsgründen in Fig. 2 nicht wiedergegeben.

Im linken vertikalen Anzeigefeld F1 ist eine Vielzahl von anwählbaren Anzeigefeldern enthalten, wobei beispielhaft drei Anzeigefelder F2, F3 und F4 wiedergegeben sind. Das Anzeigefeld F2 ist mit "Übersicht" bezeichnet und gibt bei Anwahl in dem Anzeigefeld F5 einen entsprechenden Überblick über die Eigenschaften des Edge-Geräts ED aus Fig. 1. Das Anzeigefeld F3 ist mit "App-Verwaltung" bezeichnet und ermöglicht bei Anwahl eine entsprechende Verwaltung der auf dem Edge-Gerät ED installierten Apps inklusive deren Sicherheitsprofile über das Anzeigefeld F5. Das Anzeigefeld F4 ist als "Systemeinstellungen" bezeichnet und gibt bei Anwahl entsprechende Systemeinstellungen im Anzeigefeld F5 aus.

Im dargestellten Szenario der Fig. 2 ist das Anzeigefeld F3 durch den Benutzer U angewählt, so dass im Anzeigefeld F5 eine Oberfläche der App-Verwaltung erscheint. Die Oberfläche enthält ein Anzeigefeld F6, in dem die auf dem Edge-Gerät installierten Apps in entsprechenden Anzeigefeldern F7, F8 und F9 angegeben sind. Durch Anwahl eines entsprechenden Anzeigefelds werden im benachbarten Feld F10 weitergehende Informationen zur App, wie z.B. deren Quelle oder deren Version, angegeben. Unterhalb des Anzeigefelds F10 befinden sich weitere Anzeigefelder, wobei beispielhaft drei Anzeigefelder F11, F12 und F13 wiedergegeben sind. Durch Anwahl des Anzeigefelds F11 kann die im Feld F10 angegebene App gestartet werden, wohingegen sie durch das Anzeigefeld F12 gestoppt werden kann. Durch Anwahl des Anzeigefelds F13 besteht die Möglichkeit, in einer neu generierten Benutzeroberfläche (nicht aus Fig. 2 ersichtlich) die Konfigurationseinstellungen der entsprechenden Sicherheitsmechanismen der im Feld F10 angegebenen App einzustellen. Hierbei werden dem Benutzer U die möglichen Konfigurationseinstellungen der entsprechenden Sicherheitsmechanismen angezeigt, die er dann über die Benutzerschnittstelle auswählen und zusammensetzen kann.

In dem Feld F14 werden zu der App im Feld F10 Eigenschaften und Einstellungen der App und insbesondere auch das aktuell gültige Sicherheitsprofil wiedergegeben. Im Feld F15 werden Warnungen und Ereignisse in Bezug auf die App aus Feld F10 wiedergegeben. Hier kann angezeigt werden, dass sich der App-Status verändert hat, z.B. dass eine App aktuell gestartet wurde, oder es kann die Information angegeben werden, dass für eine passive Domäne im Sicherheitsmechanismus SELinux keine Nachrichten über Zugriffe protokolliert worden sind, die im aktiven Zustand der Domäne nicht erlaubt sind. Ein Benutzer kann daraufhin die entsprechende Domäne in den aktiven Zustand versetzen. Ebenfalls kann in dem Feld F15 der Hinweis gegeben werden, dass eine entsprechende passive Domäne im Sicherheitsmechanismus SELinux zur Erhöhung der Sicherheit in den aktiven Zustand gesetzt werden kann.

In einer Variante besteht gegebenenfalls auch die Möglichkeit, dass im Rahmen der Konfiguration eines entsprechenden Sicherheitsprofils einer App mehrere Sicherheitsmechanismen zu einem Gesamt-Sicherheitsprofil zusammengefasst werden, wobei es mehrere unterschiedlich konfigurierte Gesamt-Sicherheitsprofile mit vorgegebenen Konfigurationen der darin enthaltenen Sicherheitsmechanismen gibt. Die unterschiedlich konfigurierten Gesamt-Sicherheitsprofile sind als Ganzes z.B. über die oben beschriebene Benutzerschnittstelle UI auswählbar.

In einer weiteren Variante ist ein neu konfiguriertes Sicherheitsprofil nicht dauerhaft gültig, sondern nur temporär. Beispielsweise kann eine vorbestimmte Zeitspanne festgelegt sein, in der das neu konfigurierte Sicherheitsprofil gültig ist. Ebenso kann das neu konfigurierte Sicherheitsprofil beim nächsten Beenden der entsprechenden App zurückgesetzt werden.

In einer weiteren Ausführungsform ist es auch möglich, dass der oben beschriebene Mechanismus der Neukonfiguration von Sicherheitsprofilen nur in einem bestimmten Zustand des entsprechenden Edge-Geräts bzw. einer bestimmten Ausprägung der Edge-Systemsoftware, z.B. in einem Entwickler-Modus, zur Verfügung steht, wobei im regulären Betrieb des Geräts benutzerspezifische Anpassungen des Sicherheitsprofils der App nicht vorgenommen werden können.

Die im Vorangegangenen beschriebenen Ausführungsformen der Erfindung weisen eine Reihe von Vorteilen auf. Insbesondere wird die Möglichkeit geschaffen, das Sicherheitsprofil einer App in einem Datennetz auch nach deren Installation anzupassen. Dies wird dadurch erreicht, dass Sicherheitsprofile der entsprechenden App mit Hilfe einer Dienste-Schnittstelle konfiguriert werden können. Es wird somit eine iterative, flexible und anwenderfreundliche Verwendung von Sicherheitsmechanismen zum Schutz eines Datennetzes bzw. anderer Apps vor schadhaften bzw. kompromittierten Apps ermöglicht.

## Patentansprüche

1. Verfahren zum rechnergestützten Verwalten von Sicherheitsprofilen (SP) für eine Anzahl von Applikationen (AP1, AP2) in einem Datennetz (DN), wobei eine jeweilige Applikation (AP1, AP2) als ausführbares Programm in dem Datennetz (DN) installiert ist und für eine jeweilige Applikation (AP1, AP2) im Datennetz (DN) ein aktuell gültiges Sicherheitsprofil (SP) bereitgestellt werden kann, das Regeln für den Zugriff der jeweiligen Applikation (AP1, AP2) auf Ressourcen im Datennetz (DN) festlegt, wobei das Verfahren folgende Schritte für eine jeweilige Applikation (AP1, AP2) umfasst:
a) Bereitstellen eines Standard-Sicherheitsprofils (SSP1, SSP2) für die jeweilige Applikation als das aktuell gültige Sicherheitsprofil (SP) in dem Datennetz (DN);
b) Empfangen eines konfigurierten Sicherheitsprofils (CSP1, CSP2) für die jeweilige Applikation (AP1, AP2) im Datennetz (DN) über eine Schnittstelle (IF);
c) Anwenden des empfangenen konfigurierten Sicherheitsprofils (CSP1, CSP2) als neues aktuell gültiges Sicherheitsprofil (SP) auf die jeweilige Applikation (AP1, AP2).

2. Verfahren nach Anspruch 1, **dadurch gekennzeichnet, dass** ein aktuell gültiges Sicherheitsprofil (SP) für eine jeweilige Applikation (AP1, AP2) eine Anzahl von Sicherheitsmechanismen (SM1, SM2, ..., SMn) enthält und für jeden Sicherheitsmechanismus (SM1, SM2, ..., SMn) eine Konfigurationseinstellung (CO1, CO2, ..., COn) festlegt, welche aus einer Mehrzahl von möglichen Konfigurationseinstellungen (CO1, CO2, ..., COn) des jeweiligen Sicherheitsmechanismus (SM1, SM2, ..., SMn) ausgewählt ist.

3. Verfahren nach Anspruch 1 oder 2, **dadurch gekennzeichnet, dass** im aktuell gültigen Sicherheitsprofil (SP) für zumindest eine Applikation (AP1, AP2) eine oder mehrere Zugriffsbeschränkungen der zumindest einen Applikation (AP1, AP2) jeweils in einen aktiven oder einen passiven Zustand gesetzt sind, wobei Zugriffe, die in einem aktiven Zustand einer jeweiligen Zugriffsbeschränkung nicht zugelassen sind, im entsprechenden passiven Zustand der jeweiligen Zugriffsbeschränkung erlaubt sind und bei Auftreten protokolliert werden.

4. Verfahren nach Anspruch 3, **dadurch gekennzeichnet, dass** im Falle, dass keine Zugriffe, die in einem aktiven Zustand einer jeweiligen Zugriffsbeschränkung nicht zugelassen sind, im entsprechenden passiven Zustand der jeweiligen Zugriffsbeschränkung protokolliert werden, die jeweilige Zugriffsbeschränkung in den aktiven Zustand im aktuell gültigen Sicherheitsprofil (SP) gesetzt wird und/oder ein Hinweis über eine Benutzerschnittstelle (UI) ausgegeben wird.

5. Verfahren nach einem der vorhergehenden Ansprüche, **dadurch gekennzeichnet, dass** das Standard-Sicherheitsprofil (SSP1, SSP2) in Abhängigkeit von Eigenschaften der jeweiligen Applikation (AP1, AP2) festgelegt ist.

6. Verfahren nach einem der vorhergehenden Ansprüche, **dadurch gekennzeichnet, dass** das in Schritt c) angewendete konfigurierte Sicherheitsprofil (CSP1, CSP2) temporär gültig ist und nach Ablauf seiner Gültigkeit das Standard-Sicherheitsprofil (SSP1, SSP2) für die jeweilige Applikation (AP1, AP2) gültig wird.

7. Verfahren nach einem der vorhergehenden Ansprüche, **dadurch gekennzeichnet, dass** eine Benutzerschnittstelle (UI) bereitgestellt wird, über welche ein Benutzer das Sicherheitsprofil (SP) einer jeweiligen Applikation (AP1, AP2) konfigurieren kann, wobei ein vom Benutzer konfiguriertes Sicherheitsprofil als das konfigurierte Sicherheitsprofil (CSP1, CSP2) für die jeweilige Applikation (AP1, AP2) im Datennetz über die Schnittstelle (IF) in Schritt b) empfangen wird.

8. Verfahren nach einem der vorhergehenden Ansprüche, **dadurch gekennzeichnet, dass** das in Schritt c) angewendete konfigurierte Sicherheitsprofil an eine Verarbeitungseinheit (MS) im Datennetz (DN) übertragen wird, welche das angewendete konfigurierte Sicherheitsprofil (CSP1, CSP2) auswertet.

9. Verfahren nach Anspruch 8, **dadurch gekennzeichnet, dass** die Verarbeitungseinheit (MS) in Abhängigkeit vom Ergebnis der Auswertung eine oder mehrere Veränderungen an dem angewendeten konfigurierten Sicherheitsprofil (CSP1, CSP2) vornimmt.

10. Verfahren nach einem der vorhergehenden Ansprüche, **dadurch gekennzeichnet, dass** das Datennetz (DN) ein Edge-Computing-Netzwerk mit einer Vielzahl von Edge-Geräten (ED) ist, wobei die Anzahl von Applikationen (AP1, AP2) auf zumindest einem Edge-Gerät (ED) der Vielzahl von Edge-Geräten (ED) installiert ist.

11. Verfahren nach einem der vorhergehenden Ansprüche, **dadurch gekennzeichnet, dass** das Datennetz (DN) zur Steuerung einer Automatisierungsanlage vorgesehen ist.

12. Verfahren nach einem der vorhergehenden Ansprüche, **dadurch gekennzeichnet, dass** eine jeweilige Applikation (AP1, AP2) in einem oder mehreren Containern hinterlegt ist.

13. Datennetz, in dem eine Anzahl von Applikationen (AP1, AP2) hinterlegt ist, wobei eine jeweilige Applikation (AP1, AP2) als ausführbares Programm in dem Datennetz (DN) installiert ist und für eine jeweilige Applikation (AP1, AP2) im Datennetz (DN) ein aktuell gültiges Sicherheitsprofil (SP) bereitgestellt werden kann, das Regeln für den Zugriff der jeweiligen Applikation (AP1, AP2) auf Ressourcen im Datennetz (DN) festlegt, wobei das Datennetz (DN) dazu eingerichtet ist, folgende Schritte für eine jeweilige Applikation (AP1, AP2) durchzuführen:
a) Bereitstellen eines Standard-Sicherheitsprofils (SSP1, SSP2) für die jeweilige Applikation als das aktuell gültige Sicherheitsprofil (SP) in dem Datennetz (DN);
b) Empfangen eines konfigurierten Sicherheitsprofils (CSP1, CSP2) für die jeweilige Applikation (AP1, AP2) im Datennetz (DN) über eine Schnittstelle (IF);
c) Anwenden des empfangenen konfigurierten Sicherheitsprofils (CSP1, CSP2) als neues aktuell gültiges Sicherheitsprofil (SP) auf die jeweilige Applikation (AP1, AP2).

14. Datennetz nach Anspruch 13, **dadurch gekennzeichnet, dass** das Datennetz (DN) zur Durchführung eines Verfahrens nach einem der Ansprüche 2 bis 12 eingerichtet ist.
